# EUROPÄISCHE PATENTSCHRIFT

(11) **EP 0 916 054 B1**
(45) Veröffentlichungstag und Bekanntmachung des Hinweises auf die Patenterteilung: **08.03.2000**
(21) Anmeldenummer: 97932641.0
(22) Anmeldetag: 29.07.1997
(51) Int. Cl.: F16L 9/12, F16L 11/04

(54) **MEHRSCHICHTIGES ROHR**
MULTIPLE-LAYER PIPE
TUYAU MULTICOUCHE

(30) Priorität: 29.07.1996 AT 44696 U; 25.02.1997 NL 1005371
(43) Veröffentlichungstag der Anmeldung: 19.05.1999
(73) Patentinhaber: POLOPLAST Kunststoffwerk GmbH & Co KG, 4060 Leonding (AT); WAVIN B.V., 8011 CW Zwolle (NL)
(72) Erfinder: BORTH, Rainer, A-4490 St. Florian (AT); VAN DIJK, Berend, Jan, NL-7776 XA Slagharen (NL); STOFFELSMA, Jan, Uilke, NL-7772 XC Hardenberg (NL); BESTEN, Markus, Wilhelmus, Johannes, NL-7721 ZP Dalfsen (NL)
(74) Vertreter: Hehenberger, Reinhard, Dipl.-Ing.
(86) Internationale Anmeldenummer: AT9700176
(87) Internationale Veröffentlichungsnummer: WO9804861

(56) Entgegenhaltungen:
- EP-A- 0 358 178
- CA-A- 2 092 897
- CH-A- 538 079
- DE-U- 9 411 008
- FR-A- 2 391 058
- US-A- 4 322 260

## Beschreibung

Die Erfindung betrifft ein durch Coextrusion hergestelltes mehrschichtiges Rohr, gegebenenfalls mit angeformter Muffe, dessen Mittelschichte aus mit Mineralstoff gefülltem Polyolefin besteht.

Bisher haben Rohre in der Abwasserentsorgung aus Polyolefinen, wie Polypropylen (PP) oder Polyethylen (PE) den Nachteil, daß sie einen hohen Materialbedarf (Wanddicke) für die erforderliche Steifigkeit und eine unter Belastung ausgeprägte Langzeitdeformation aufweisen. Dies hat zur Folge, daß Kanalrohre aus Polyolefinen mit der für die Anwendung erforderlichen Nenn-Steifigkeit (SN) SN4 (4kN/m²), und SN8 (8kN/m²) gegenüber PVC-Rohren oder Hohlkammerrohren nicht wirtschaftlich sind und einen zu hohen Polymeranteil beinhalten.

Ein weiterer Nachteil ist die Herstellung der angeformten Muffe an Polyolefin-(PP und PE)-Rohren. Bisher ist eine exakte Verformung nur mit hohem verfahrenstechnischem Aufwand (sowohl im Spreizkern als auch im Blasverfahren) möglich gewesen. Dabei waren große Toleranzen zur Einhaltung der Langzeit-Schrumpfwerte erforderlich. Dies hatte zur Folge, daß zu große Toleranzen an den Muffenmaßen und unterschiedliche Schrumpfwerte zu einer nicht exakten Paßfähigkeit mit den zu verbindenden Rohrenden oder Formstücken führten. Zudem sind die Aufwärm- und Abkühlzeiten bei Polyolefin-(PP- und PE-)Rohren relativ hoch, so daß die Produktionsgeschwindigkeit in Abhängigkeit der Wandstärke und somit die Wirtschaftlichkeit beeinträchtigt wurde.

Aus der AT 0 000 643 U1 ist ein dreischichtiges Rohr bekannt, dessen Mittelschichte aus Polypropylen, das mit 25 bis 50 Gew.-% Talkum gefüllt ist, besteht. Durch die hohe Dichte der Mittelschichte des bekannten Rohres (etwa 1,2 g/cm³) ergibt sich der Nachteil eines hohen Gewichts bei größeren Wandstärken, insbesondere großer Dicke der Mittelschicht.

Der Erfindung liegt die Aufgabe zugrunde, die eingangs beschriebenen Nachteile von Polyolefin-(PP- oder PE-)Rohren zu kompensieren.

Insbesondere ist es ein Ziel der Erfindung, den ökologisch und ökonomisch nachteilig hohen Polymeranteil des Rohres auf weniger als die Hälfte bisher bekannter Rohre zu reduzieren ohne die anwendungstechnischen Eigenschaften des Rohres zu verschlechtern.

Gelöst wird diese Aufgabe mit einem Rohr mit den Merkmalen des Anspruches 1.

Bevorzugte Ausgestaltung des Rohres der Erfindung sind Gegenstand der Unteransprüche.

In einer Ausführungsform ist das erfindungsgemäße Rohr ein Mehrschichtrohr, das vorzugsweise im Coextrusionsverfahren hergestellt ist. Das Mehrschichtrohr besteht beispielsweise aus wenigstens einer tragenden Schichte, vorzugsweise der Mittelschichte, aus einem mineralstoffgefüllten und geschäumten Polyolefin, insbesondere Polypropylen. Beispielsweise weist das Rohr eine, insbesondere dünnwandige, Außen- und Innenschichte auf.

Durch die Erfindung wird ein Rohr im Dimensionsbereich DN 100 bis DN 1000 z.B. aus einem Polyolefin, insbesondere aus PP geschaffen, an das Muffen im Inline-Verfahren direkt angeformt werden können. Beim erfindungsgemäßen Rohr ist die radiale Rohrsteifigkeit, bei den in der Tabelle angeführten Mindestwandstärken nicht kleiner als 4 kN/m² (geprüft nach ISO/DIS 9969). In der Mittelschichte kann ein Umlaufmaterial, ein Regenerat oder ein Recyclat verarbeitet werden. Unter den Begriffen "Regenerat" und "Recyclat" ist im vorliegenden folgendes zu verstehen: Ein Regenerat ist ein Umlaufmaterial, das durch Produktionsausschuß entsteht und - ohne weiteren Gebrauch - in den Produktionsfluß wieder eingeleitet wird. Ein Recyclat ist ein aus einem bereits im Gebrauch befundenen Produkt rückgewonnenes Material, das dann zu einem anderen oder auch zu dem gleichen Produkt verarbeitet wird.

Im vorliegenden ist der Begriff "radiale Rohrsteifigkeit" mit "Scheitelsteifigkeit" (SN) gleichzusetzen. SN ist jene Steifigkeit, die einer Last am Scheitel eines Rohres einer definierten "Scheiteldeformation" nach ISO/DIS 9969 entgegenwirkt. Die Scheitelsteifigkeit steht im Gegensatz zur achsialen Rohrsteifigkeit. Die Bezeichnungsunterschiede haben ihren Ursprung aus der Betrachtung der Last- und Auflagereinflüsse und der Art der Reaktion (Biegung, Beulung, Knickung usw.) des Rohres auf diese Lasten. Radial = Deformation im Rohrquerschnitt, z.B. Beulen, Achsial = Deformation in der Rohrlängsachse, z.B. Biegung.

Die Erhöhung der Rohrsteifigkeit bzw. des Elastizitätsmoduls wird bei der Erfindung vornehmlich durch die mineralstoffgefüllte, geschäumte Schichte herbeigeführt.

Die geschäumte Schichte, welche die Mittelschichte eines dreischichtigen Rohres sein kann, kann mit Talkum, Kreide od.dgl. als Mineralstoff, oder einem Gemisch aus mehreren Mineralstoffen gefüllt sein.

Bevorzugt ist es bei der Erfindung, wenn die geschäumte (Mittel-)Schichte aus Polypropylen oder aus Polyethylen besteht. Dabei kann vorgesehen sein, daß die Schichten des erfindungsgemäßen Rohres aus dem gleichen Kunststoff bestehen.

Eine außerhalb der geschäumten Mittelschicht vorgesehene Außenschicht kann bei dem erfindungsgemäßen Rohr eine Dicke von 0,2 bis 2,0 mm besitzen. Eine innerhalb der geschäumten Mittelschicht vorgesehene Innenschichte kann eine Dicke von 0,2 bis 3,0 mm haben. Die Innenschichte kann beispielsweise aus Polypropylencopolymer bestehen.

Das erfindungsgemäße Rohr kann eine radiale Rohrsteifigkeit von mehr als 4 kN/m² besitzen.

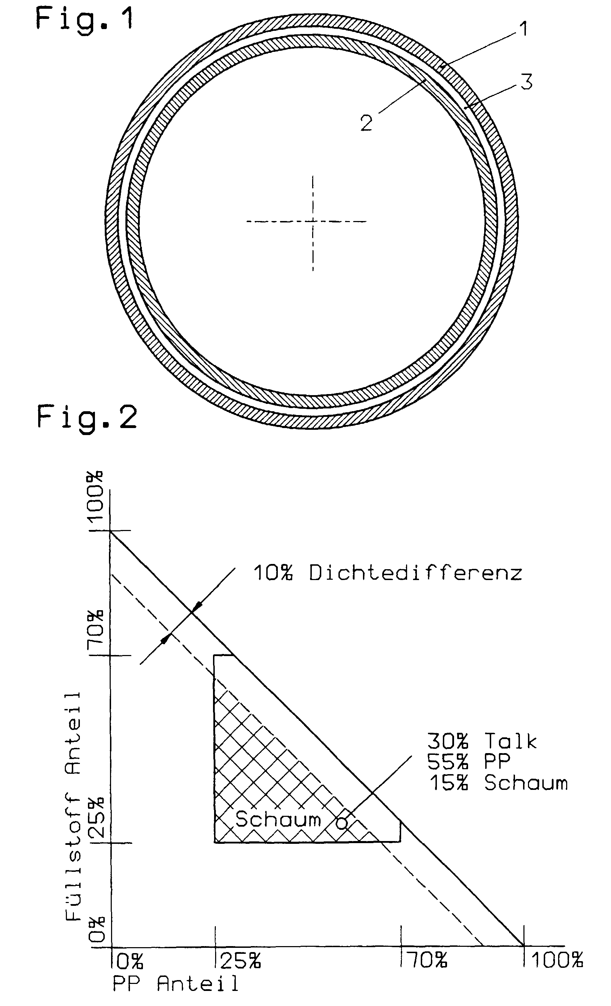

Ein Beispiel für ein erfindungsgemäßes Rohr ist im Schnitt in Fig. 1 dargestellt. Wenngleich in dem Ausführungsbeispiel, das in der Zeichnung dargestellt ist, ein dreischichtiges Rohr gezeigt ist, ist die Erfindung nicht auf solche Rohre beschänkt. Es können auch mehr oder weniger als drei Schichten vorgesehen sein, z.B. mehr als zwei nicht geschäumte Schichten und/oder mehrere geschäumte Schichten.

Um das optimale Verhältnis zwischen ausreichender Schlagzähigkeit und hoher Steifigkeit zu gewährleisten, kann eine Mischung verwendet werden, die aus mit 25 bis 70 Gew.-Teilen Talkum oder aus mit 25 bis 70 Gew.-Teilen Kreide oder einem Gemisch aus Kreide und Talkum etwa im Verhältnis 1:1 gefüllten Polyolefin, z.B. PP (PP = Polypropylen) bzw. PP-Homo- bzw. Copolymer, oder einem Gemisch daraus, besteht.

Durch die Mineralstoffverstärkung und eine gleichmäßige Mineralstoffverteilung wird eine Steifigkeit im E-Modulbereich von etwa 2.000 - 3.500 N/mm² im Mittelschichtmaterial erreicht. Der Mineralstoffeintrag hat den Nachteil, daß das Gewicht des Rohres erheblich ansteigt. Die Dichte einer beispielsweise mit 35 Teilen Talkum gefüllten PP-(Mittel-)Schichte beträgt 1,18 bis 1,2 g/cm³. Mit Hilfe eines Treibmittels wird die mineralstoffgefüllte (Mittel-)Schichte im Extrusionsprozeß aufgeschäumt und die Dichte um vorzugsweise wenigstens 10%, beispielsweise von ursprünglich 1,2 g/cm³ auf höchstens 1,08 g/cm³, vorzugsweise auf 0,8 bis 0,9 g/cm³ reduziert. Die Dichte kann aber auch beispielsweise bis zu 0,2 g/cm³ oder noch weniger betragen.

Dieses Material ist das Trägermaterial in der (Mittel)-Schichte des erfindungsgemäßen Rohres. Durch die hohe Mineralstoffüllung des Polyolefin-Werkstoffes der (Mittel-)Schichte, beispielsweise des Polypropylens (PP), liegt auch eine geringere Enthalpie bzw. eine höhere Wärmeleitung vor, die für die raschere und gleichmäßigere Erwärmung und Abkühlung bei der anschließenden Muffenverformung vorteilhaft ist. Die gleichmäßige Verteilung der Wandstärken aller Rohrschichten und der Mineralstoffe im Werkstoff z.B. der Mittelschichte gewährleisten auch ein kontrollierbares Schrumpfmaß am Rohr und an der Muffe.

Die Außen- und Innenschichten des Rohres unterstützen die erforderliche Innendruckfestigkeit und die Schlagzähigkeitseigenschaft bei tieferen Temperaturen. Die Innen- und Außenschichte können bei der Erfindung aus einem Polyolefin z.B. PP-Copolymer bestehen.

Bislang waren aus Polyolefin bestehende Rohre meist einschichtig hergestellt, was zu Problemen in den Randfasern mit unterschiedlicher Kristiallinität führte, da die unterschiedlichen Bereiche der Kristiallinität nicht genau definiert bzw. hergestellt werden konnten und zudem während der Herstellung in unregelmäßigen Bereichen schwankten.

Da die Kristallinität aber einen sehr wesentlichen Faktor für die Kurz- und Langzeit-Innendruckfestigkeit und die Schlagzähigkeit eines Rohres darstellt, ist es für die Optimierung dieser mechanischen Werte wünschenswert, den Kristallisationsanteil besonders in der Innenschichte zu vergleichsmäßigen und möglichst hoch einzustellen. Je dünnwandiger eine Rohrschicht im Vergleich zur Oberfläche des Rohres ist, umso besser kann die Kristallinität beim Abkühlprozeß gesteuert werden und umso leichter ist der Kristallisationsanteil über die Länge und am Umfang des Rohres konstant (auf einen vorgegebenen Wert) zu halten.

Dies wird durch das erfindungsgemäße Rohr ermöglicht, da hier die wenigstens eine, mit Mineralstoffen verstärkte und geschäumte Schicht den wesentlichen Teil der Tragfähigkeit des Rohres übernimmt. Dadurch wird es möglich, die Innen- und Außenschicht dünn zu halten und auf die jeweiligen Erfordernisse genau abzustimmen, wie soeben beschrieben wurde. Zusätzlich kann zur Erhöhung der Festigkeitswerte des Rohres teilvernetztes Polypropylen gegebenenfalls in einer Mischung mit unvernetztem Polypropylen, verwendet werden.

Die Wandstärken sind den mechanisch-chemischen Anforderungen angepaßt und mit der Gesamtwandstärke in Tabelle 1 dimensionsbezogen dargestellt.

**Tabelle 1:**

| Rohrdimensionen und Wandstärken für 3-Schichtrohre mit einer Scheitelsteifigkeit von 4 kN/m² (SN 4) | | | | | | |
|---|---|---|---|---|---|---|
| DN | d1 | si min | sm min | sa min | s ges min | s real |
| | [mm] | [mm] | [mm] | [mm] | [mm] | [mm] |
| 110 | 110,00 | 0,60 | 2,30 | 0,50 | 3,40 | 3,70 |
| 125 | 125,00 | 0,60 | 2,70 | 0,50 | 3,80 | 4,20 |
| 160 | 160,00 | 0,60 | 3,60 | 0,50 | 4,70 | 5,30 |
| 200 | 200,00 | 0,60 | 4,70 | 0,50 | 5,80 | 6,60 |
| 250 | 250,00 | 0,70 | 5,90 | 0,60 | 7,20 | 8,30 |
| 315 | 315,00 | 0,80 | 7,50 | 0,70 | 9,00 | 10,40 |
| 400 | 400,00 | 1,00 | 9,50 | 0,80 | 11,30 | 13,20 |
| 500 | 500,00 | 1,10 | 12,00 | 0,90 | 14,00 | 16,50 |
| 600 | 600,00 | 1,20 | 15,30 | 1,00 | 17,50 | 20,80 |

**Tabelle 2:**

| Rohrdimensionen und Wandstärken für 3-Schichtrohre mit einer Schelteisteifigkeit von 8 kN/m² (SN 8) | | | | | | |
|---|---|---|---|---|---|---|
| DN | d1 | si min | sm min | sa min | s ges min | s real |
| | [mm] | [mmj | [mm] | [mm] | [mmj | [mm] |
| 110 | 110,00 | 0,60 | 3,00 | 0,50 | 4,10 | 4,60 |
| 125 | 125,00 | 0,60 | 3,50 | 0,50 | 4,60 | 5,20 |
| 160 | 160,00 | 0,60 | 4,70 | 0,50 | 5,80 | 6,70 |
| 200 | 200,00 | 0,60 | 6,00 | 0,50 | 7,10 | 8,30 |
| 250 | 250,00 | 0,70 | 7,50 | 0,60 | 8,80 | 10,30 |
| 315 | 315,00 | 0,80 | 9,50 | 0,70 | 11,00 | 13,00 |
| 400 | 400,00 | 1,00 | 12,10 | 0,80 | 13,90 | 16,50 |
| 500 | 500,00 | 1,10 | 15,30 | 0,90 | 17,30 | 20,70 |
| 600 | 600,00 | 1,20 | 19,40 | 1,00 | 21,60 | 26,00 |
| d1 Außendurchmesser Sa Wandstärke Außenschichte Sm Wandstärke Mittelschichte Si Wandstärke Innenschichte Sges Wandstärke gesamt Sreal empfohlene Wandstärke, beispielhaft min jeweilige Mindestwerte | | | | | | |

Die Innenschichte 2 und/oder die Außenschichte 1 kann auch aus anderen Kunststoffen als dem Kunststoff der Mittelschichte 3, der beispielsweise PP ist, bestehen, wenn diese mittels Haftvermittler - also jeweils zwei weiteren Schichten - mit der Mittelschichte 3 verbunden werden. Diese Kunststoffe für die Außen- und/oder der Innenschichte 1 und 2 können beispielhaft sein:
Polyethylen (PE)
Acrylnitril-Styrol-Butadien-Copolymer (ABS)
Copolymere aus Styrol und Acrylnitril (SAN)
Polyamid (PA)

Die Erfindung erlaubt einen sehr niedrigen Polymereinsatz (Verbesserung der Ökologie-Bilanz) bei Erfüllung der Anforderungen an drucklose Abwasserleitungen, mit verbesserter Wirtschaftlichkeit gegenüber Vollwandrohren, und Rohren mit nur gefüllter Mittelschicht. Weiters werden verbesserte Eigenschaften gegenüber Rohren mit nur geschäumter Mittelschicht (nicht verstärkt oder gefüllt) erreicht:
Dünnere Wand bei gleicher Steifigkeit,
höhere Langzeitsteifigkeit,
höherer E-Modul,
Kriechfaktor verbessert,
höherer Ausstoß und
bessere Kühlung bei der Fertigung.

Gegenüber Rohren mit Mittelschichten (nicht geschäumt), die nur mit Mineralstoff verstärkt sind, ergeben sich folgende Vorteile:
Verbesserte Wärmeisolierung,
bessere Wirksamkeit der Innentemperierung,
Kosteneinsparung und geringes Gewicht.

In dem als Fig. 2 angeschlossenen Diagramm ist der bevorzugte Bereich des Aufbaues einer geschäumten Schichte, die vorzugsweise die Mittelschichte eines dreischichtigen Rohres ist, durch Kreuz-Schraffur hervorgehoben, deren PP-Anteil vorzugsweise zwischen 25 und 70 % und deren Mineralstoffanteil ebenfalls vorzugsweise 25 - 70 % beträgt. Gegenüber einer Schichte, die nur mit Mineralstoff verstärkt aber nicht geschäumt ist, ist die Dichte um wenigstens 10 % niedriger. Beispielhaft ist eine Zusammensetzung einer Mittelschichte angegeben, die 30 % Talkum, 55 % Polypropylen und 15 % Schaumanteil am PP enthält.

Beispielsweise kann ein bevorzugtes Ausführungsbeispiel der Erfindung wie folgt beschrieben werden:

Ein Rohr mit vorzugsweise angeformter Muffe, das als Abwasserrohr verwendbar ist, und dessen radiale Rohrsteifigkeit bei den in Tabelle 1 angeführten Wandstärken größer als 4 kN/m² ist, besteht aus drei Schichten 1, 2, 3. Die Mittelschichte 3 besteht aus einem Polyolefin, insbesondere Polypropylen, das mit 25 bis 70 Gew.-% Mineralstoff verstärkt und auf eine Dichte von vorzugsweise wenigstens 10 % geringer als die Dichte einer vergleichbaren im gleichen Verhältnis nur verstärkten Mittelschichte geschäumt ist. Die Außenschichte 1 und die Mittelschichte 2 bestehen bevorzugt aus dem gleichen Kunststoff wie die Mittelschichte 3. Die Mittelschicht ist bevorzugt mit Talkum oder Kreide oder einem Gemisch aus beiden verstärkt.

Die Polymereinsatzmenge beträgt weniger als die Hälfte als die Hälfte als vergleichbare Rohre, die nicht mineralstoffverstärkt und geschäumt werden.

## Patentansprüche

1. Mehrschichtiges Rohr aus Kunststoff, dadurch gekennzeichnet, daß wenigstens eine Schicht (3), vorzugsweise die Mittelschichte (3), aus mit Mineralstoff oder einem Gemisch aus Mineralstoffen verstärktem Polyolefin, besteht, wobei der Anteil des Polyolefins in dieser Schicht (3) 25-70 Gew.-% beträgt, und daß diese Schichte auf eine Dichte aufgeschäumt ist, die wenigstens 10% niedriger ist als die Dichte einer ungeschäumten mineralstoffverstärkten Schicht mit identischer Zusammensetzung.

2. Rohr nach Anspruch 1, dadurch gekennzeichnet, daß an das Rohr eine Muffe einstückig angeformt ist.

3. Rohr nach Anspruch 1 oder 2, dadurch gekennzeichnet, daß die geschäumte Schicht (3) Umlaufmaterial aus Rohren des gleichen Kunststoffes enthält.

4. Rohr nach einem der Ansprüche 1 bis 3, dadurch gekennzeichnet, daß der die geschäumte Schicht (3) bildende Kunststoff bis zu 50 Gew.-% Polyolefinrecyclat enthält.

5. Rohr nach einem der Ansprüche 1 bis 4, dadurch gekennzeichnet, daß die Wandstärke der Schicht (3) mindestens 50% der Gesamtwandstärke des Rohres beträgt.

6. Rohr nach einem der Ansprüche 1 bis 5, dadurch gekennzeichnet, daß die geschäumte Schichte (3) und/oder eine innerhalb derselben angeordnete Schicht (2) aus teilvernetztem Polypropylen besteht.

7. Rohr nach einem der Ansprüche 1 bis 5, dadurch gekennzeichnet, daß die geschäumte Schichte (3) und/oder eine innerhalb derselben angeordnete Schicht (2) aus einer Mischung aus Polypropylen und teilvernetztem Polypropylen besteht.

8. Rohr nach Anspruch 7, dadurch gekennzeichnet, daß die Mischung aus 10-50 Gew.-%, vorzugsweise 15-25 Gew.-% teilvernetztem PP, bezogen auf 100 Teile PP-Basis (z.B. Polypropylen-Copolymer) besteht.

9. Rohr nach einem der Ansprüche 1 bis 8, dadurch gekennzeichnet, daß die geschäumte Schicht (3), mit Talkum und/oder Kreide als Mineralstoff gefüllt ist.

10. Rohr nach einem der Ansprüche 1 bis 9, dadurch gekennzeichnet, daß die Mittelschicht auf eine Dichte von bis zu 0,9 g/cm³, vorzugsweise 0,8 g/cm³, geschäumt ist.

11. Rohr nach einem der Ansprüche 1-5 und bis 10, dadurch gekennzeichnet, daß die geschäumte Schicht (3) aus mineralstoffverstärkten Polypropylen besteht.

12. Rohr nach einem der Ansprüche 1 bis 11, dadurch gekennzeichnet, daß die Außenschichte (1) und die Innenschichte (2) aus Polypropylen bestehen.

13. Rohr nach einem der Ansprüche 1 bis 12, dadurch gekennzeichnet, daß die Innenschicht (2) und die Außenschichte (1) aus dem gleichen Polyolefin wie die geschäumte mineralstoffverstärkte Mittelschicht (3) besteht.

14. Rohr nach einem der Ansprüche 1 bis 13, dadurch gekennzeichnet, daß die Innenschichte (2) einen höheren, fein verteilten, mittleren Kristallinitätsanteil aufweist als die Außenschichte (1).

15. Rohr nach Anspruch 14, dadurch gekennzeichnet, daß das Polymer der Mittelschichte (3) einen höheren, feinverteilten, mittleren Kristallinitätsanteil aufweist als die Außenschichte (1).

16. Verfahren zum Herstellen eines Rohres nach einem der Ansprüche 1 bis 15, dadurch gekennzeichnet, daß das Rohr im Coextrusionsverfahren mit Außenkühlung und mit Innentemperierung hergestellt worden ist.

17. Verfahren nach Anspruch 16, dadurch gekennzeichnet, daß die Sphärolitbildung bzw. die höhere Kristallinität der Innenschicht (2) gesteuert hergestellt wird.

## Claims

1. Multiple-layer pipe made of plastic material, characterised in that at least one layer (3), preferably the middle layer (3), is made of polyolefin which is reinforced with mineral material or a mixture of mineral materials, the proportion of polyolefin in this layer (3) being 25 - 70% by weight and in that this layer is foamed to a density which is at least 10% less than the density of an unfoamed layer which has been reinforced with mineral material and has an identical composition.

2. Pipe according to claim 1, characterised in that a muff is moulded on the pipe integrally.

3. Pipe according to claim 1 or 2, characterised in that the foamed layer (3) contains reprocessed material from pipes of the same plastic material.

4. Pipe according to one of the claims 1 to 3, characterised in that the plastic material forming the foamed layer (3) contains up to 50% by weight of polyolefin recycled material.

5. Pipe according to one of the claims 1 to 4, characterised in that the wall strength of the layer (3) is at least 50% of the total wall strength of the pipe.

6. Pipe according to one of the claims 1 to 5, characterised in that the foamed layer (3) and/or a layer (2) arranged inside the same is made of partially cross-linked polypropylene.

7. Pipe according to one of the claims 1 to 5, characterised in that the foamed layer (3) and/or a layer (2) arranged inside the same is made of a mixture of polypropylene and partially cross-linked polypropylene.

8. Pipe according to claim 7, characterised in that the mixture comprises 10 - 50% by weight, preferably 15 - 25% by weight of partially cross-linked polypropylene, relative to 100 parts polypropylene base (e.g. polypropylene copolymer).

9. Pipe according to one of the claims 1 to 8, characterised in that the foamed layer (3) is filled with talcum and/or chalk as mineral material.

10. Pipe according to one of the claims 1 to 9, characterised in that the middle layer is foamed to a density of up to 0.9 g/cm³, preferably 0.8 g/cm³.

11. Pipe according to one of the claims 1 to 5 and up to 10, characterised in that the foamed layer (3) is made of polypropylene which is reinforced with mineral material.

12. Pipe according to one of the claims 1 to 11, characterised in that the outer layer (1) and the inner layer (2) are made of polypropylene.

13. Pipe according to one of the claims 1 to 12, characterised in that the inner layer (2) and the outer layer (1) are made of the same polyolefin as the foamed middle layer (3) which is reinforced with mineral material.

14. Pipe according to one of the claims 1 to 13, characterised in that the inner layer (2) has a higher, finely distributed, average proportion of crystallinity than the outer layer (1).

15. Pipe according to claim 14, characterised in that the polymer of the middle layer (3) has a higher, finely distributed, average proportion of crystallinity than the outer layer (1).

16. Method for producing a pipe according to one of the claims 1 to 15, characterised in that the pipe has been produced by the coextrusion method with external cooling and internal heating.

17. Method according to claim 16, characterised in that the spherulite formation or the higher crystallinity of the inner layer (2) is produced in a controlled manner.

## Revendications

1. Tube multicouches en matière plastique, caractérisé par le fait qu'au moins une couche (3), de préférence la couche intermédiaire (3), est constituée d'une polyoléfine renforcée par une charge minérale ou un mélange de charges minérales, la proportion de la polyoléfine dans cette couche (3) étant comprise entre 25 et 70 % en poids, et par le fait que cette couche est expansée jusqu'à une masse volumique d'au moins 10 % inférieure à celle d'une couche non expansée de composition identique renforcée par des charges minérales.

2. Tube selon la revendication 1, caractérisé par le fait que le tube comporte un manchon formé d'une pièce sur le tube.

3. Tube selon la revendication 1 ou 2, caractérisé par le fait que la couche expansée (3) contient de la matière retravaillie à partir de tubes constitués de la même matière plastique.

4. Tube selon l'une des revendications 1 à 3, caractérisé par le fait que la matière plastique formant la couche expansée (3) contient jusqu'à 50 % en poids de polyoléfine recyclée.

5. Tube selon l'une des revendications 1 à 4, caractérisé par le fait que l'épaisseur de la couche (3) représente au moins 50 % de l'épaisseur totale du tube.

6. Tube selon l'une des revendications 1 à 5, caractérisé par le fait que la couche expansée (3) et/ou une couche (2) disposée côté intérieur de celle-ci est constituée de polypropylène partiellement réticulé.

7. Tube selon l'une ces revendications 1 à 5, caractérisé par le fait que la couche expansée (3) et/ou une couche (2) disposée côté intérieur de celle-ci est constituée d'un mélange de polypropylène et de polypropylène partiellement réticulé.

8. Tube selon la revendication 7, caractérisé par le fait que le mélange est constitué de 10 à 50 % en poids, de préférence de 15 à 25 % en poids de polypropylène partiellement réticulé, rapporté à 100 parties de base de polypropylène (par exemple copolymère à base de propylène).

9. Tube selon l'une des revendications 1 à 8, caractérisé par le fait que la couche expansée (3) contient comme charge minérale du talc et/ou de la craie.

10. Tube selon l'une des revendications 1 à 9, caractérisé par le fait que la couche intermédiaire est expansée jusqu'à une masse volumique pouvant aller jusqu'à 0,9 g/cm³, de préférence jusqu'à 0,8 g/cm³.

11. Tube selon l'une des revendications 1 à 5 et à 10, caractérisé par le fait que la couche expansée (3) est constituée de polypropylène renforcé par des charges minérales.

12. Tube selon l'une des revendications 1 à 11, caractérisé par le fait que la couche extérieure (1) et la couche intérieure (2) sont constituées de polypropylène.

13. Tube selon l'une des revendications 1 à 12, caractérisé par le fait que la couche intérieure (2) et la couche extérieure (1) sont constituées de la même polyoléfine que la couche intermédiaire (3) expansée renforcée par des charges minérales.

14. Tube selon l'une des revendications 1 à 13, caractérisé par le fait que la couche intérieure (2) présente une teneur moyenne en cristaux finement dispersés plus élevée que la couche extérieure (1).

15. Tube selon la revendication 14, caractérisé par le fait que le polymère de la couche intermédiaire (3) présente une teneur moyenne en cristaux finement dispersés plus élevée que la couche extérieure (1).

16. Procédé de fabrication d'un tube selon l'une quelconque des revendications 1 à 15, caractérisé par le fait que le tube est fabriqué par coextrusion avec refroidissement par l'extérieur et chauffage par l'intérieur.

17. Procédé selon la revendication 16, caractérisé par le fait qu'il permet d'obtenir de manière contrôlée la formation de sphérolites ou le taux de cristallinité plus élevé de la couche intérieure (2).
